# EUROPEAN PATENT SPECIFICATION

(11) **EP 3 879 762 B1**
(45) Date of publication and mention of the grant of the patent: **09.12.2026**
(21) Application number: 20162340.2
(22) Date of filing: 11.03.2020
(51) Int. Cl.: H04L 12/46

(54) **DATA COMMUNICATION SYSTEM AND METHOD OF COMMUNICATING DATA**
DATENKOMMUNIKATIONSSYSTEM UND VERFAHREN ZUR KOMMUNIKATION VON DATEN
SYSTÈME DE COMMUNICATION DE DONNÉES ET PROCÉDÉ DE COMMUNICATION DE DONNÉES

(43) Date of publication of application: 15.09.2021
(73) Proprietor: Rohde & Schwarz GmbH & Co. KG, 81671 München (DE)
(72) Inventor: Wicke, Christian, 81671 München (DE)
(74) Representative: Novagraaf Group

(56) References cited:
- US-A1- 2016 028 695
- US-B1- 6 266 704
- PATRICK KWADWO AGYAPONG ET AL: "Design Considerations for a 5G Network Architecture - Semantic Scholar", 22 November 2014 (2014-11-22), XP055476160, Retrieved from the Internet <URL:https://pdfs.semanticscholar.org/cf82/05dddcf91b86814a18e6859b4d894f6b482c.pdf> [retrieved on 20180517]
- SAMPIGETHAYA K ET AL: "A Survey on Mix Networks and Their Secure Applications", PROCEEDINGS OF THE IEEE, IEEE. NEW YORK, US, vol. 94, no. 12, 1 December 2006 (2006-12-01), pages 2142 - 2181, XP011442831, ISSN: 0018-9219, DOI: 10.1109/JPROC.2006.889687
- STEVEN J MURDOCH ED - WRIGHT REBECCA N ET AL: "Hot or not", PROCEEDINGS OF THE 13TH. ACM CONFERENCE ON COMPUTER AND COMMUNICATIONS SECURITY. CCS 2006. ALEXANDRIA, VA, OCT. 30 - NOV. 3, 2006; [ACM CONFERENCE ON COMPUTER AND COMMUNICATIONS SECURITY], NEW YORK, NY : ACM, US, 30 October 2006 (2006-10-30), pages 27 - 36, XP058157145, ISBN: 978-1-59593-518-2, DOI: 10.1145/1180405.1180410

## Description

The invention relates to a data communication system for communication between a central hub and at least one hardware device. Further, the invention relates to a method of communicating data from a first entity to a second entity.

Modern test and/or measurement devices exchange data with a central hub, for instance a server, a data center and/or a cloud service that might be executed on a public server. The data exchanged may relate to data that shall be protected against third parties which might eavesdrop the data communication when using a public domain network like the Internet for data communication. Typically, this is accomplished by means of virtual private networks (VPNs) that generally extend a respective private network across a public network like the Internet, while enabling users to send and receive data across shared or public networks as if their respective computing devices were directly connected to the private network. In fact, the virtual private networks provide an encrypted connection over the Internet such that data communication is ensured in a more secure manner compared to an open communication via the Internet.

However, the data communication known in the state of the art for exchanging data associated with test and/or measurement devices do not entirely ensure a secure communication with typical efforts. Put differently, the efforts required for establishing a secure communication by means of the virtual private networks are high, resulting in high costs for the data communication. Particularly, the maintenance expenses, namely the respective costs and efforts, as well as the configuration expenses when using virtual private networks for data communication are high.

In Patrick Kwadwo Agyapong ET AL: "Design Considerations for a 5G Network Architecture - Semantic Scholar", design considerations concerning a public 5G network architecture is described.

SAMPIGETHAYA KET AL: "A Survey on Mix Networks and Their Secure Applications", PROCEEDINGS OF THE IEEE, IEEE. NEW YORK, US, vol. 94, no. 12 describe a mix network.

In US 6 266 704 B1 and US 2016/028695 A1 systems and methods for network routing are described.

STEVEN J MURDOCH ED - WRIGHT REBECCA NET AL: "Hot or not", PROCEEDINGS OF THE 13TH. ACM CONFERENCE ON COMPUTER AND COMMUNICATIONS SECURITY. CCS 2006. ALEXANDRIA, VA, OCT. 30 - NOV. 3, 2006; [ACM CONFERENCE ON COMPUTER AND COMMUNICATIONS SECURITY], NEW YORK, NY: ACM, US, 30 October 2006 (2006-10-30), pages 27-36 describes a network with hidden services.

Accordingly, there is a need for a safe and cost-efficient data communication between a central hub and at least one hardware device, for instance a test and/or measurement device.

Further, the invention provides a method of communicating data from a first entity, for instance the central hub or the hardware device, to a second entity, for instance the hardware device or the central hub, as defined in claim 11.

The invention provides a data communication system for communication between a central hub and at least one hardware device as defined in claim 1.

Accordingly, the central hub and the at least one hardware device are interconnected with each other by means of the mix network that is used for the respective data transfer between the central hub and the at least one hardware device. The mix network ensures a secure data communication of the respective data to be exchanged since the mix network provides a hard-to-trace communication. The virtual local area network (VLAN) tunnel may further increase the security of the data communication and is associated with the (wireless) private network.

Since the respective data exchanged between the central hub and the hardware device is fragmented and/or encrypted it is ensured that eavesdroppers cannot directly gain any information. Particularly, any attack like a man-in-the-middle attack (MITM) cannot gather any information.

Hence, the original data to be transmitted may be fragmented and/or encrypted in order to provide the at least one data packet. Additionally or alternatively, the at least one data packet is processed by the second entity in order to reunite and/or decrypt the at least one data packet to obtain the original data.

Generally, a mix network is associated with routing protocols that create the respective hard-to-trace communication by using a chain of (proxy) servers, also called mixers or nodes. In fact, the mix network breaks the (direct) communication link established between the source and the destination, for instance the hardware device and the central hub or vice versa, making it harder for eavesdroppers to trace end-to-end communication between the respective entities, namely the hardware device and the central hub. Put differently, the mix network is interconnected between the central hub and the at least one hardware device such that the respective data exchanged has to be processed by the mix network.

Moreover, the data exchanged by means of data packets is encrypted to each node using public key cryptography. When processing the data packets, each node strips off its own layer of encryption to reveal where to send the respective data next.

Since the mix network is connected to the central hub, the central hub is embedded in the mix network. In other words, the central hub has a network interface via which the central hub is connected with the mix network such that data is received and/or transmitted via its network interface.

The hardware device may be a measurement and/or testing device. Generally, the hardware device may relate to an installed hardware device. Particularly, the hardware device is located (and installed) at a customer site wherein the respective customer uses a service of the provider and/or operator of the central hub.

The central hub is configured to receive the data from the at least one hardware device, to transmit the data to the at least one hardware device, to store the data and/or to process the data, for instance forwarding the data to another entity. In fact, the functionality of the central hub depends on the respective operation mode of the data communication system, particularly the communication direction provided.

Generally, the data communication system is configured to establish a bidirectional communication wherein data can be transferred from the at least one hardware device to the central hub and vice versa.

As mentioned above, the data communication provided for communicating the data between the first entity and the second entity is established inter alia by means of the mix network which ensures the secure data communication.

Particularly, the private network is a wireless private network.

The several middle nodes are located in one mix cascade layer or in several mix cascade layers that are connected in a subsequent way.

The middle node shuffles the data packets. In addition, the middle node outputs the data packets in random order to a subsequent node.

For instance, the mix network comprises two or more entry nodes that each receive a respective data packet associated with the data to be transmitted. The respective data packets received via the at least two entry nodes are forwarded to the several middle nodes that are also called mix nodes as they perform the respective mixing of the data packets. When mixing the data packets, each middle node removes a layer of encryption using its own private key, wherein each middle node shuffles the order of the data packets such that the result of the shuffling, namely the data packets in the shuffled order, is forwarded to the next node, also called subsequent node. The subsequent node may relate to another middle node (of another mix cascade layer) that performs the respective steps again, namely the shuffling. Alternatively, the result of the shuffling is forwarded to a respective exit node communicating with an entity connected with the mix network.

The hidden service corresponds to a server configured to receive inbound connections only through a so-called Tor. The name "Tor" is derived from an acronym for the original project name "The Onion Router". In fact, the Tor directs data traffic, particularly data traffic associated with a public domain network like the Internet, through a network consisting of several relays, namely nodes, to conceal the location of the entities of the data communication. In fact, the respective location and/or usage is concealed from anyone else conducting network surveillance or traffic analysis, for instance an eavesdropper. In fact, the respective routing is implemented by encryption in the application layer of a communication protocol stack which is nested like the layers of an onion.

As mentioned above, the Tor encrypts the data packets, including the next node destination Internet Protocol address, multiple times and sends it through a virtual circuit comprising successive, random-selection nodes. Each node decrypts a respective layer of encryption to reveal the next node in the circuit to pass the remaining encrypted data onto the next node revealed. The final node decrypts the innermost layer of encryption and sends the original data to its destination, namely the respective entity, without revealing or knowing the Internet Protocol address of the source of the original data.

Accordingly, the data communication using the mix network, particularly the hidden service provided, is protected in a very strong manner.

An aspect provides that the mix network comprises at least one mix cascade layer that is configured to receive and/or transmit data via at least two entry nodes. The mix cascade layer acts like an anonymizer due to the at least one mix cascade layer. The mix cascade layer is provided by at least one middle node that receives data (packets) from the at least two entry nodes and mixes the data (packets). Put differently, the respective data to be transmitted is shuffled by means of the mix cascade layer which, therefore, breaks the (direct) communication link between the source and the destination of the data communication, thereby ensuring a more secure communication.

Furthermore, at least one mix cascade layer is assigned to the (wireless) communication interface, wherein the at least one mix cascade layer is configured to receive and/or transmit data via at least two entry nodes. Particularly, the mix cascade layer assigned to the (wireless) communication interface is an additional one with respect to the one of the mix network. Each entity may be associated with a respective mix network, particularly mix cascade layer. However, the respective mix cascade layers associated with each entity of the data communication system may also correspond to the same mix cascade layer. Put differently, the respective entities are connected to the same mix network.

Particularly, the mix network is part of a public domain network. The public domain network may relate to the Internet or a Wide Area Network (WAN). This means that the respective nodes may be associated with the public domain network. The mix network ensures that the data communication is encrypted or rather secure such that eavesdroppers do not have any chance to gather information even though the public domain network is used for data communication. Put differently, even though the public domain network is used which is potentially unsafe, the mix network that is part of the public domain network ensures secure communication.

Further, the virtual local area network may be associated with the wireless private network.

The central hub may be configured to execute an integrity check for received data. Thus, the data received by means of the central hub is checked with respect to its integrity. In fact, the respective data packets associated with the data to be transmitted are checked by means of the central hub in order to assure the accuracy and consistency of the data received.

Particularly, the integrity check is performed at least partly by means of artificial intelligence, for instance a neural network. The artificial intelligence provides an easy way to check the integrity of the data received in an automatic and autonomous manner.

Another aspect provides that the data received from and/or transmitted to the hardware device corresponds to measurement data obtained by the hardware device, telemetry data of the hardware device, service interval data of the hardware device, usage statistics of the hardware device, maintenance data of the hardware device and/or error data of the hardware device. All these different kinds of data may relate to private and/or confidential data that shall not be public to anyone else. Therefore, the respective data is transmitted via the mix network in order to ensure safe communication of the respective data.

Another aspect provides that the at least one hardware device is located at another location compared to the central hub. As mentioned above, the hardware device may be located at a customer site, whereas the central hub is located at the site of the provider or operator of the central hub. Accordingly, the public domain network is necessary to exchange the data between the at least one hardware device and the central hub since both entities are located at different locations, for instance in different countries.

Generally, the central hub may be established by a server, for instance an internal server, or a cloud application executed on a public server. Thus, the central hub may relate to a server, a data center or a cloud service.

Furthermore, the public domain network comprises a (wireless) access point. The (wireless) private network may be connected with the (wireless) access point that is a public one.

The wireless access point may be configured to provide a communication by means of the 5G or the 5G NR telecommunication standard
The foregoing aspects and many of the attendant advantages of the claimed subject matter will become more readily appreciated as the same become better understood by reference to the following detailed description, when taken in conjunction with the accompanying drawings, wherein:

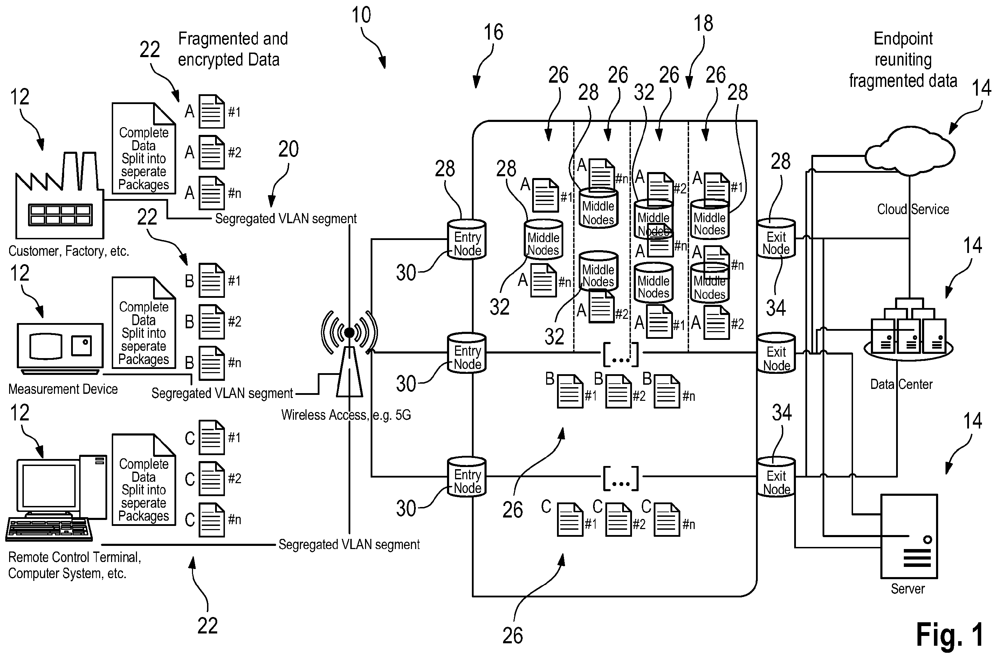

- Figure 1 schematically shows a data communication system according to the invention that is configured to perform a method of communicating data according to the invention.

In Figure 1, a data communication system 10 is shown that comprises several hardware devices 12, for instance measurement and/or test devices, computer systems, remote control terminals and so on, as well as a central hub 14, for instance a cloud service, a data center and/or a server.

Generally, the hardware devices 12 may be located at a customer site, for instance in a factory, whereas the central hub 14 may be located at a different location.

The data communication system 10 ensures secure data communication between the hardware devices 12 and the central hub 14 even though they are located at different locations. Accordingly, both entities, namely the hardware device(s) 12 and the central hub 14, are connected with each other via a public domain network 16, for instance the Internet or rather a Wide Area Network (WAN).

In fact, the hardware devices 12 and the central hub 14 are connected with each other by means of a mix network 18 as well as a wireless private network 20 that is associated with the hardware devices 12. The mix network 18 is associated with the public domain network 16. Particularly, the mix network 18 is part of the public domain network 16.

The wireless private network 20 is a private network that cannot be accessed by anyone contrary to the public domain network 16.

Moreover, a wireless communication interface 22 is provided that is assigned to the hardware device 12 such that the hardware device 12 can be embedded into the wireless private network 20. The wireless communication interface 22 is generally configured to receive data to be transmitted from the hardware device 12 to the central hub 14 and/or to forward data to the hardware device 12 which was transmitted by the central hub 14 previously.

The wireless communication interface 22 may be part of the hardware device 12 itself. Alternatively, the wireless communication interface 22 is separately formed, but (wirelessly) connected with the hardware device 12 in a signal-transmitting manner.

Furthermore, Figure 1 shows that the mix network 18 is connected with the wireless private network 20 by means of a wireless access point 24 that is part of the public domain network 16, for instance the Internet.

In the shown embodiment, the wireless access point 24 is configured to provide a communication by means of the 5G telecommunication standard.

In fact, the hardware devices 12 communicate with the wireless access point 24 by means of the wireless communication interface 22 such that the respective data exchanged is processed by the wireless communication interface 22 and the wireless access point 24 respectively.

Furthermore, Figure 1 reveals that the mix network 18 comprises several mix cascade layers 26 as well as several nodes 28.

In the shown embodiment, the mix network 18 comprises three different entry nodes 30 that are connected with several middle nodes 32 that establish the several mix cascade layers 26. The middle nodes 32 are connected to three exit nodes 34 that are assigned with the central hub 14. In general, the middle nodes 32 establish the mix cascade layers 26 that ensure mixing of the respective data packets received via the entry nodes 30 as will be described later.

Depending on the data transmission direction, the entry nodes 30 may act as exit nodes 34 and vice versa.

The middle nodes 32 however are generally configured to receive data packets from at least one previous node, for instance the entry node 30 or rather a previous middle node 32 (associated with a previous mix cascade layer 26). The respective middle nodes 32 are further configured to shuffle data packets received and to output the data packets in a random order to a subsequent node 28, for instance a subsequent middle node 32 (associated with a subsequent mix cascade layer 26) or rather the respective exit node 34.

In Figure 1, the respective data packets are labelled by letters A, B, C depending on their origin, namely the respective hardware device 12. Furthermore, the data packets are labelled by numbers #1 to #n for each hardware device 12 indicating that the original data is fragmented prior to its transmission.

As shown in Figure 1, the respective middle nodes 32 of the mix network 18 process the respective data packets differently, namely in a random order. For instance, the data packet A#1 is processed by middle nodes 32 associated with the first, third and fourth mix cascade layers 26, whereas the data packet A#2 is processed by middle nodes 32 associated with the second, third and fourth mix cascade layers 26.

Generally, the mix network 18, particularly the mix cascade layers 26, provides at least one hidden service by processing the respective data packets received in the manner described above, namely in a random order, resulting in a shuffling of the data packets processed.

As already mentioned above, the data to be transmitted is fragmented such that data packets are obtained, wherein the respective data is also encrypted prior to being forwarded to the public domain network 16, namely via the wireless access point 24.

In fact, an end-to-end encryption is ensured such that the data to be transmitted in the respective data packets is decrypted at the destination entity, namely the central hub 14 that receives the respective data packets from the exit nodes 34 associated with the mix network 18.

In order to increase the data communication security, a virtual local network tunnel (VLAN tunnel) may be provided. The VLAN tunnel is associated with the wireless private network 20 since the data may be provided as segregated VLAN segment(s) as shown in Figure 1.

In general, the central hub 14 executes an integrity check of the data packets received in order to verify the accuracy and consistency of the data received. The integrity check may be done by means of artificial intelligence, for instance a neural network. Hence, the integrity check is performed in an automatic and autonomous manner without any manual input.

The data received from the hardware device 12 may correspond to measurement data obtained by the hardware device 12, telemetry data of the hardware device 12, service interval data of the hardware device 12, usage statistics of the hardware device 12, maintenance data of the hardware device 12 and/or error data of the hardware device 12. Thus, the central hub 14 is generally configured to gather certain information of the measurement device 12.

Since the central hub 14 is connected with the several hardware devices 12, for instance several hardware devices 12 located at different locations, via the public domain network 16 by means of the mix network 18, the central hub 14 receives many information of different hardware devices 12 in a secure manner. The central hub 14 is enabled to process the respective data obtained in order to gather information concerning the different measurement devices 12.

Generally, the data communication system 10 shown in Figure 1 is configured to perform a bidirectional data communication. This means that the hardware device 12 may transmit data to the central hub 14 as described above. However, the data communication system 10 is also configured to transmit data in the opposite direction, namely from the central hub 14 to the hardware device(s) 12.

In a similar manner, the central hub 14 splits the complete data to be transmitted, namely the original data to be transmitted, into several separated data packages that are forwarded to a wireless access point 24, for instance by means of segregated virtual local area network (VLAN) segments. Furthermore, the data packets may also correspond to fragmented and encrypted data that is transmitted via a VLAN tunnel to the wireless access point 24. Then, the data is transmitted via the public domain network 16, wherein the public domain network 16 is accessed via the wireless access point 24.

In the public domain network 16 used for data transmission, the mix network 18 is provided such that the data packets transmitted are received by the respective entry nodes 30 of the mix network 18. Then, the data packets are forwarded to the mix cascade layer(s) 26, namely the respective middle nodes 32 that process the data in a similar manner as described above. Afterwards, the respective data packets are forwarded or rather outputted by means of the mix network 18.

The hardware devices 12 that shall receive the respective data receives the data packets accordingly such that the information of rather original data is transmitted in a secure manner while using the public domain network 16.

Generally, the different entities, namely the hardware device(s) 12 and the central hub(s) 14, may each be associated with a mix network 18. The entities may use the same mix network 18 or different ones that are associated with the respective entity.

Accordingly, a secure data communication is ensured by means of the data communication system 10 according to the invention.

## Claims

1. A data communication system for communication between a central hub (14) and at least one hardware device (12), wherein the data communication system (10) comprises a central hub (14) for processing data, and a communication interface (22) assigned to the hardware device (12), and wherein the communication interface (22) is configured to receive data to be transmitted from the hardware device (12) to the central hub (14) and/or to forward data to the hardware device (12) which was transmitted by the central hub (14), **characterized in that** the data communication system (10) comprises a mix network (18) provided by several nodes (28) that comprise at least one entry node (30), several middle nodes (32) and at least one exit node (34), wherein the several middle nodes (32) each are configured to receive data packets from at least one previous node (28), shuffle the data packets, and output the data packets in random order to a subsequent node (28) such that the mix network (18) provides at least one hidden service, wherein the data communication system (10) further comprises a wireless private network (20), wherein the at least one hardware device (12) and the central hub (14) are connected with each other by means of the mix network (18) and the wireless private network (20), wherein the hardware device (12) is embedded in the wireless private network (20), wherein the central hub (14) is embedded in the mix network (18), wherein the mix network (18) is connected with the wireless private network (20) by means of a wireless access point (24) that is part of a public domain network (16), and wherein a virtual local area network tunnel is provided for exchanging the data that is split into several separated data packages and forwarded to the wireless access point (24) by means of segregated virtual local area network segments.

2. The data communication system according to claim 1, wherein the mix network (18) comprises at least one mix cascade layer (26) that is configured to receive and/or transmit data via at least two entry nodes (30).

3. The data communication system according to any of the preceding claims, wherein at least one mix cascade layer is assigned to the communication interface (22), wherein the at least one mix cascade layer is configured to receive and/or transmit data via at least two entry nodes (30), in particular wherein the mix cascade layer assigned to the communication interface (22) is additional with respect to the one of the mix network (18).

4. The data communication system according to any of the preceding claims, wherein the data exchanged is fragmented and/or end-to-end encrypted.

5. The data communication system according to any of the preceding claims, wherein the public domain network (16) is the Internet.

6. The data communication system according to any of the preceding claims, wherein the virtual local area network tunnel is associated with the wireless private network (20).

7. The data communication system according to any of the preceding claims, wherein the central hub (14) is configured to execute an integrity check for received data, in particular wherein the integrity check is performed at least partly by means of artificial intelligence, for instance a neural network.

8. The data communication system according to any of the preceding claims, wherein the data received from and/or transmitted to the hardware device corresponds to measurement data obtained by the hardware device (12), telemetry data of the hardware device (12), service interval data of the hardware device (12), usage statistics of the hardware device (12), maintenance data of the hardware device (12) and/or error data of the hardware device (12).

9. The data communication system according to any of the preceding claims, wherein the at least one hardware device (12) is located at another location compared to the central hub (14).

10. The data communication system according to any of the preceding claims, wherein the central hub (14) is established by an internal server or a cloud application executed on a public server.

11. A method of communicating data from a first entity (12, 14) to a second entity (12, 14), wherein the method comprises the steps of:
- Providing at least one data packet by means of the first entity (12, 14), wherein the at least one data packet is associated with original data to be transmitted,
- Forwarding the at least one data packet to the second entity (12, 14), and
- Processing the at least one data packet by means of the second entity (12, 14),
wherein the at least one data packet is forwarded via a wireless private network (20) and a mix network (18) to the second entity (12, 14), wherein the wireless private network (20) and the mix network (18) are connected with each other by means of a wireless access point (24) that is part of a public domain network (16), wherein the mix network (18) is provided by several nodes (28) that comprise at least one entry node (30), several middle nodes (32) and at least one exit node (34), wherein the several middle nodes (32) each are configured to receive data packets from at least one previous node (28), shuffle the data packets, and output the data packets in random order to a subsequent node (28) such that the mix network (18) provides at least one hidden service, wherein either the first entity is at least one hardware device (12) and the second entity is a central hub (14) or the first entity is a central hub (14) and the second entity is at least one hardware device (12) such that secure data communication between the at least one hardware device (12) and the central hub (14) is ensured, and wherein a virtual local area network tunnel is provided for exchanging the data that is split into several separated data packages and forwarded to the wireless access point (24) by means of segregated virtual local area network segments.

## Patentansprüche

1. Datenkommunikationssystem für eine Kommunikation zwischen einem zentralen Hub (14) und mindestens einer Hardwarevorrichtung (12), wobei das Datenkommunikationssystem (10) einen zentralen Hub (14) zum Verarbeiten von Daten und eine Kommunikationsschnittstelle (22) umfasst, die der Hardwarevorrichtung (12) zugeordnet ist, und wobei die Kommunikationsschnittstelle (22) konfiguriert ist, um zu sendende Daten von der Hardwarevorrichtung (12) an den zentralen Hub (14) zu empfangen und/oder um Daten an die Hardwarevorrichtung (12) weiterzuleiten, die durch den zentralen Hub (14) gesendet wurden, **dadurch gekennzeichnet, dass** das Datenkommunikationssystem (10) ein Mix-Netzwerk (18) umfasst, das durch mehrere Knoten (28) bereitgestellt wird, die mindestens einen Eingangsknoten (30), mehrere mittlere Knoten (32) und mindestens einen Ausgangsknoten (34) umfassen, wobei die mehreren mittleren Knoten (32) jeweils konfiguriert sind, um Datenpakete von mindestens einem vorherigen Knoten (28) zu empfangen, die Datenpakete zu mischen und die Datenpakete in zufälliger Reihenfolge an einen nachfolgenden Knoten (28) derart auszugeben, dass das Mix-Netzwerk (18) mindestens einen verborgenen Dienst bereitstellt, wobei das Datenkommunikationssystem (10) ferner ein drahtloses privates Netzwerk (20) umfasst, wobei die mindestens eine Hardwarevorrichtung (12) und der zentrale Hub (14) mittels des Mix-Netzwerks (18) und des drahtlosen privaten Netzwerks (20) miteinander verbunden sind, wobei die Hardwarevorrichtung (12) in das drahtlose private Netzwerk (20) eingebettet ist, wobei der zentrale Hub (14) in das Mix-Netzwerk (18) eingebettet ist, wobei das Mix-Netzwerk (18) mit dem drahtlosen privaten Netzwerk (20) mittels eines drahtlosen Zugangspunkts (24) verbunden ist, der Teil eines Public-Domain-Netzwerks (16) ist, und wobei ein virtueller Tunnel eines lokalen Netzwerks zum Austauschen der Daten bereitgestellt ist, die in mehrere getrennte Datenpakete aufgeteilt und an den drahtlosen Zugangspunkt (24) mittels segregierter virtueller Segmente des lokalen Netzwerks weitergeleitet werden.

2. Datenkommunikationssystem nach Anspruch 1, wobei das Mix-Netzwerk (18) mindestens eine Mix-Kaskadenschicht (26) umfasst, die konfiguriert ist, um Daten über mindestens zwei Eingangsknoten (30) zu empfangen und/oder zu senden.

3. Datenkommunikationssystem nach einem der vorstehenden Ansprüche, wobei mindestens eine Mix-Kaskadenschicht der Kommunikationsschnittstelle (22) zugeordnet ist, wobei die mindestens eine Mix-Kaskadenschicht konfiguriert ist, um Daten über mindestens zwei Eingangsknoten (30) zu empfangen und/oder zu senden, insbesondere wobei die Mix-Kaskadenschicht, die der Kommunikationsschnittstelle (22) zugeordnet ist, in Bezug auf diejenige des Mix-Netzwerks (18) zusätzlich ist.

4. Datenkommunikationssystem nach einem der vorstehenden Ansprüche, wobei die ausgetauschten Daten fragmentiert und/oder Ende-zu-Endeverschlüsselt sind.

5. Datenkommunikationssystem nach einem der vorstehenden Ansprüche, wobei das Public-Domain-Netzwerk (16) das Internet ist.

6. Datenkommunikationssystem nach einem der vorstehenden Ansprüche, wobei der virtuelle Tunnel des lokalen Netzwerks mit dem drahtlosen privaten Netzwerk (20) verknüpft ist.

7. Datenkommunikationssystem nach einem der vorstehenden Ansprüche, wobei der zentrale Hub (14) konfiguriert ist, um eine Integritätsprüfung für empfangene Daten auszuführen, insbesondere wobei die Integritätsprüfung mindestens teilweise mittels künstlicher Intelligenz, beispielsweise eines neuronalen Netzwerks, durchgeführt wird.

8. Datenkommunikationssystem nach einem der vorstehenden Ansprüche, wobei die Daten, die von der Hardwarevorrichtung empfangen und/oder an diese gesendet werden, Messdaten, die durch die Hardwarevorrichtung (12) erhalten werden, Telemetriedaten der Hardwarevorrichtung (12), Wartungsintervalldaten der Hardwarevorrichtung (12), Nutzungsstatistiken der Hardwarevorrichtung (12), Wartungsdaten der Hardwarevorrichtung (12) und/oder Fehlerdaten der Hardwarevorrichtung (12) entsprechen.

9. Datenkommunikationssystem nach einem der vorstehenden Ansprüche, wobei sich die mindestens eine Hardwarevorrichtung (12) im Vergleich zu dem zentralen Hub (14) an einem anderen Ort befindet.

10. Datenkommunikationssystem nach einem der vorstehenden Ansprüche, wobei der zentrale Hub (14) durch einen internen Server oder eine Cloud-Anwendung eingerichtet ist, die auf einem öffentlichen Server ausgeführt wird.

11. Verfahren zum Kommunizieren von Daten von einer ersten Entität (12, 14) an eine zweite Entität (12, 14), wobei das Verfahren die Schritte umfasst:
- Bereitstellen mindestens eines Datenpakets mittels der ersten Entität (12, 14), wobei das mindestens eine Datenpaket mit zu sendenden Originaldaten verknüpft ist,
- Weiterleiten des mindestens einen Datenpakets an die zweite Entität (12, 14), und
- Verarbeiten des mindestens einen Datenpakets mittels der zweiten Entität (12, 14),
wobei das mindestens eine Datenpaket über ein drahtloses privates Netzwerk (20) und ein Mix-Netzwerk (18) an die zweite Entität (12, 14) weitergeleitet wird, wobei das drahtlose private Netzwerk (20) und das Mix-Netzwerk (18) mittels eines drahtlosen Zugangspunkts (24) miteinander verbunden sind, der Teil eines Public-Domain-Netzwerks (16) ist, wobei das Mix-Netzwerk (18) durch mehrere Knoten (28) bereitgestellt wird, die mindestens einen Eingangsknoten (30), mehrere mittlere Knoten (32) und mindestens einen Ausgangsknoten (34) umfassen, wobei die mehreren mittleren Knoten (32) jeweils konfiguriert sind, um Datenpakete von mindestens einem vorherigen Knoten (28) zu empfangen, die Datenpakete zu mischen und die Datenpakete in zufälliger Reihenfolge an einen nachfolgenden Knoten (28) derart auszugeben, dass das Mix-Netzwerk (18) mindestens einen verborgenen Dienst bereitstellt, wobei entweder die erste Entität mindestens eine Hardwarevorrichtung (12) ist und die zweite Entität ein zentraler Hub (14) ist oder die erste Entität ein zentraler Hub (14) ist und die zweite Entität mindestens eine Hardwarevorrichtung (12) derart ist, dass eine sichere Datenkommunikation zwischen der mindestens einen Hardwarevorrichtung (12) und dem zentralen Hub (14) sichergestellt ist, und wobei ein virtueller Tunnel des lokalen Netzwerks zum Austauschen der Daten bereitgestellt ist, die in mehrere getrennte Datenpakete aufgeteilt und an den drahtlosen Zugangspunkt (24) mittels segregierter virtueller Segmente des lokalen Netzwerks weitergeleitet werden.

## Revendications

1. Système de communication de données pour une communication entre un concentrateur central (14) et au moins un dispositif matériel (12), dans lequel le système de communication de données (10) comprend un concentrateur central (14) pour traiter des données, et une interface de communication (22) affectée au dispositif matériel (12), et dans lequel l'interface de communication (22) est configurée pour recevoir des données à transmettre du dispositif matériel (12) au concentrateur central (14) et/ou pour transférer des données au dispositif matériel (12) qui ont été transmises par le concentrateur central (14), **caractérisé en ce que** le système de communication de données (10) comprend un réseau de mélange (18) fourni par plusieurs nœuds (28) qui comprennent au moins un nœud d'entrée (30), plusieurs nœuds intermédiaires (32) et au moins un nœud de sortie (34), dans lequel les plusieurs nœuds intermédiaires (32) sont chacun configurés pour recevoir des paquets de données d'au moins un nœud précédent (28), remanier les paquets de données, et délivrer en sortie les paquets de données dans un ordre aléatoire à un nœud suivant (28) de telle sorte que le réseau de mélange (18) fournit au moins un service caché, dans lequel le système de communication de données (10) comprend en outre un réseau privé sans fil (20), dans lequel l'au moins un dispositif matériel (12) et le concentrateur central (14) sont connectés l'un à l'autre au moyen du réseau de mélange (18) et du réseau privé sans fil (20), dans lequel le dispositif matériel (12) est intégré dans le réseau privé sans fil (20), dans lequel le concentrateur central (14) est intégré dans le réseau de mélange (18), dans lequel le réseau de mélange (18) est connecté au réseau privé sans fil (20) au moyen d'un point d'accès sans fil (24) qui fait partie d'un réseau de domaine public (16), et dans lequel un tunnel de réseau local virtuel est fourni pour échanger les données qui sont divisées en plusieurs ensembles de données séparés et transférés vers le point d'accès sans fil (24) au moyen de segments de réseau local virtuel isolés.

2. Système de communication de données selon la revendication 1, dans lequel le réseau de mélange (18) comprend au moins une couche de cascade de mélange (26) qui est configurée pour recevoir et/ou transmettre des données par l'intermédiaire d'au moins deux nœuds d'entrée (30).

3. Système de communication de données selon l'une quelconque des revendications précédentes, dans lequel au moins une couche de cascade de mélange est affectée à l'interface de communication (22), dans lequel l'au moins une couche de cascade de mélange est configurée pour recevoir et/ou transmettre des données par l'intermédiaire d'au moins deux nœuds d'entrée (30), en particulier dans lequel la couche de cascade de mélange affectée à l'interface de communication (22) est supplémentaire par rapport à celle du réseau de mélange (18).

4. Système de communication de données selon l'une quelconque des revendications précédentes, dans lequel les données échangées sont fragmentées et/ou chiffrées de bout en bout.

5. Système de communication de données selon l'une quelconque des revendications précédentes, dans lequel le réseau de domaine public (16) est Internet.

6. Système de communication de données selon l'une quelconque des revendications précédentes, dans lequel le tunnel de réseau local virtuel est associé au réseau privé sans fil (20).

7. Système de communication de données selon l'une quelconque des revendications précédentes, dans lequel le concentrateur central (14) est configuré pour exécuter un contrôle d'intégrité pour les données reçues, en particulier dans lequel le contrôle d'intégrité est réalisé au moins en partie au moyen d'une intelligence artificielle, par exemple un réseau de neurones.

8. Système de communication de données selon l'une quelconque des revendications précédentes, dans lequel les données reçues du et/ou transmises au dispositif matériel correspondent à des données de mesure obtenues par le dispositif matériel (12), des données de télémétrie du dispositif matériel (12), des données d'intervalle de service du dispositif matériel (12), des statistiques d'utilisation du dispositif matériel (12), des données de maintenance du dispositif matériel (12) et/ou des données d'erreur du dispositif matériel (12).

9. Système de communication de données selon l'une quelconque des revendications précédentes, dans lequel l'au moins un dispositif matériel (12) est situé au niveau d'un autre emplacement par comparaison avec le concentrateur central (14).

10. Système de communication de données selon l'une quelconque des revendications précédentes, dans lequel le concentrateur central (14) est établi par un serveur interne ou une application en nuage exécutée sur un serveur public.

11. Procédé de communication de données d'une première entité (12, 14) à une seconde entité (12, 14), dans lequel le procédé comprend les étapes consistant à :
- fournir au moins un paquet de données au moyen de la première entité (12, 14), dans lequel l'au moins un paquet de données est associé à des données d'origine à transmettre,
- transférer l'au moins un paquet de données à la seconde entité (12, 14), et
- traiter l'au moins un paquet de données au moyen de la seconde entité (12, 14),
dans lequel l'au moins un paquet de données est transféré par l'intermédiaire d'un réseau privé sans fil (20) et d'un réseau de mélange (18) vers la seconde entité (12, 14), dans lequel le réseau privé sans fil (20) et le réseau de mélange (18) sont connectés l'un à l'autre au moyen d'un point d'accès sans fil (24) qui fait partie d'un réseau de domaine public (16), dans lequel le réseau de mélange (18) est fourni par plusieurs nœuds (28) qui comprennent au moins un nœud d'entrée (30), plusieurs nœuds intermédiaires (32) et au moins un nœud de sortie (34), dans lequel les plusieurs nœuds intermédiaires (32) sont chacun configurés pour recevoir des paquets de données en provenance d'au moins un nœud précédent (28), remanier les paquets de données, et délivrer en sortie les paquets de données dans un ordre aléatoire à un nœud suivant (28) de telle sorte que le réseau de mélange (18) fournit au moins un service caché, dans lequel soit la première entité est au moins un dispositif matériel (12) et la seconde entité est un concentrateur central (14) soit la première entité est un concentrateur central (14) et la seconde entité est au moins un dispositif matériel (12) de telle sorte qu'une communication de données sécurisée entre l'au moins un dispositif matériel (12) et le concentrateur central (14) est assurée, et dans lequel un tunnel de réseau local virtuel est fourni pour échanger les données qui sont divisées en plusieurs ensembles de données séparés et transférés vers le point d'accès sans fil (24) au moyen de segments de réseau local virtuel séparés.
